(19) Europäisches Patentamt
European Patent Office
Office européen des brevets

(11) **EP 3 455 592 B1**

(12) **EUROPÄISCHE PATENTSCHRIFT**

(45) Veröffentlichungstag und Bekanntmachung des Hinweises auf die Patenterteilung:
**18.03.2020   Patentblatt 2020/12**

(21) Anmeldenummer: **17721376.6**

(22) Anmeldetag: **04.05.2017**

(51) Int Cl.:
***G01D 5/20*** *(2006.01)*

(86) Internationale Anmeldenummer:
**PCT/EP2017/060600**

(87) Internationale Veröffentlichungsnummer:
**WO 2017/194374 (16.11.2017 Gazette 2017/46)**

(54) **SENSORANORDNUNG ZUR BERÜHRUNGSLOSEN WEGERFASSUNG UND VERFAHREN ZUM BESTIMMEN EINER RELATIVPOSITION**

SENSOR ASSEMBLY FOR DETECTING A DISPLACEMENT IN A CONTACTLESS MANNER, AND METHOD FOR DETERMINING A RELATIVE POSITION

ENSEMBLE DE DÉTECTION POUR LA DÉTECTION DE TRAJECTOIRE SANS CONTACT ET PROCÉDÉ PERMETTANT DE DÉTERMINER UNE POSITION RELATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2016   DE 102016207880**

(43) Veröffentlichungstag der Anmeldung:
**20.03.2019   Patentblatt 2019/12**

(73) Patentinhaber: **Robert Bosch GmbH
70442 Stuttgart (DE)**

(72) Erfinder:
• **HERRMANN, Ingo
71292 Friolzheim (DE)**
• **UTERMOEHLEN, Fabian
71229 Leonberg (DE)**

(56) Entgegenhaltungen:
**EP-A1- 2 851 655     DE-A1- 10 231 980
US-A1- 2007 001 666**

**Beschreibung**

Die Erfindung geht aus von einer Sensoranordnung zur berührungslosen Wegerfassung nach der Gattung des unabhängigen Patentanspruchs 1. Gegenstand der vorliegenden Erfindung ist auch ein Verfahren zum Bestimmen einer Relativposition eines Sensors in Bezug auf ein Target einer solchen Sensoranordnung zur berührungslosen Wegerfassung.

Aus dem Stand der Technik sind auf dem Wirbelstromprinzip basierende Sensoranordnungen zur berührungslosen Wegerfassung bekannt. Die Sensoranordnung umfasst ein Target mit einem entlang eines Messwegs verlaufenden Messwertgeber, welcher mindestens eine elektrisch leitfähige Messspur aufweist, und einen Wirbelstromsensor mit einem Messwertaufnehmer, welcher mindestens eine Messspule aufweist, welche über der mindestens einen elektrisch leitfähigen Messspur angeordnet ist. Die elektrisch leitfähige Messspur ändert ihre Breite entlang des Messwegs derart, dass sich eine Überdeckung der mindestens einen Messspule mit der elektrisch leitfähigen Messspur entlang des Messwegs ändert. Die Messspule induziert in der elektrisch leitfähigen Messspur einen Wirbelstrom, welcher zu einer Induktivitätsänderung der Messspule führt, die in einem elektrischen Schwingkreis verschaltet ist, dessen Resonanzfrequenz sich dadurch ändert. Diese Frequenzänderung kann als Messsignal zur Weg- oder Winkelmessung ausgewertet werden.

Eine toleranzrobuste Auslegung erfordert den Einsatz von mehreren Sensorspulen und mehreren leitfähigen Spuren, die meistens eine identische Geometrie aufweisen, allerdings in Messrichtung versetzt zueinander angeordnet sind. Neben der Bewegung in Messrichtung (y-Richtung) kann es aufgrund von Toleranzen zu einer Verschiebung und zu Abstandsänderungen zwischen der Messspule und der elektrisch leitfähigen Messspur, d.h. zu einer Bewegung in x-Richtung und z-Richtung kommen. Des Weiteren ist eine Verkippung des Targets um die y-Achse möglich. Die Verkippung und die Veränderung des Abstands sind besonders kritisch für das Messverfahren, da der Wirbelstromeffekt eine starke Abstandsabhängigkeit aufweist.

Aus der DE 10 2004 033 083 A1 ist beispielsweise ein Wirbelstromsensor zur kontinuierlichen Weg- oder Winkelmessung bekannt. Der Wirbelstromsensor umfasst einen Sensor und einen leitfähigen Geber, wobei der Sensor wenigstens eine Spule zur Erzeugung von Wirbelströmen im leitfähigen Geber umfasst. Sensor und Geber können sich in einer Bewegungsrichtung relativ zueinander bewegen. Eine zeitkontinuierliche Weg- oder Winkelmessung kann dadurch realisiert werden, dass der Geber eine leitfähige Spur aufweist, die derart gestaltet ist, dass sich die komplexe Impedanz der Spule beim Abtasten der Spur in Bewegungsrichtung kontinuierlich ändert.

Aus der US 2007/001666 A1 ist eine gattungsgemäße Sensoranordnung zur berührungslosen Wegerfassung mit einem Target, welches einen entlang eines Messwegs verlaufenden Messwertgeber mit mindestens einer elektrisch leitfähigen Messspur aufweist, und einem Wirbelstromsensor mit einem Messwertaufnehmer bekannt, welcher mindestens zwei Detektionsspulen umfasst. Der Messwertaufnehmer ist beabstandet zum Messwertgeber und relativ beweglich entlang der mindestens einen elektrisch leitfähigen Messspur angeordnet und überdeckt diese zumindest teilweise. Mindestens eine der Detektionsspulen wirkt als Messspule, deren Messsignal eine Auswerte- und Steuereinheit zur Wegbestimmung auswertet, und mindestens eine der Detektionsspulen wirkt als Korrekturspule, deren Messsignal die Auswerte- und Steuereinheit zur Korrektur der Wegbestimmung auswertet.

Offenbarung der Erfindung

Die Sensoranordnung zur berührungslosen Wegerfassung mit den Merkmalen des unabhängigen Patentanspruchs 1 und das Verfahren zum Bestimmen einer Relativposition eines Sensors in Bezug auf ein Target einer solchen Sensoranordnung mit den Merkmalen des unabhängigen Patentanspruchs 15 haben den Vorteil, dass mindestens eine Korrekturspur und mindestens eine Korrekturspule zur Korrektur der Verkippung und des Abstands eingesetzt werden. Hierbei wird das Target bzw. der Messwertgeber segmentiert und der Wirbelstromsensor mit mindestens zwei Detektionsspulen ausgeführt, welche je nach Targetposition die Rolle der Messspulen oder die Rolle der Korrekturspule übernehmen.

Ausführungsformen der vorliegenden Erfindung ermöglichen in vorteilhafter Weise eine kleinbauende Sensoranordnung zur berührungslosen Wegerfassung, welche eine mindestens genau so gute Toleranzrobustheit wie aus dem Stand der Technik bekannte Sensoranordnungen aufweisen, aber nur eine Sensorleiterplatte sowie ein einseitig strukturiertes Target aufweisen. Durch die gemeinsame segmentierte Geometrie zur Ausbildung der mindestens einen Messspur und der mindestens einen Korrekturspur ist ein deutlich reduzierter Bauraum erforderlich, da die Breite bis auf ein Drittel reduziert werden kann. Zudem ergibt sich durch die toleranzrobustere Sensoranordnung eine kostengünstigere Aufbau- und Verbindungstechnik, da höhere Einbautoleranzen zugelassen werden können. Durch das einfache Messprinzip ergibt sich des Weiteren eine hohe EMV-Robustheit.

Ausführungsformen der vorliegenden Erfindung stellen eine Sensoranordnung zur berührungslosen Wegerfassung mit einem Target, welches einen entlang eines Messwegs verlaufenden Messwertgeber mit mindestens einer elektrisch leitfähigen Messspur aufweist, und einem Wirbelstromsensor mit einem Messwertaufnehmer zur Verfügung, welcher mindestens zwei Detektionsspulen umfasst. Der Messwertaufnehmer ist beabstandet zum Messwertgeber und relativ beweglich entlang der mindestens einen elektrisch leitfähigen Messspur angeordnet und überdeckt diese zumindest teilweise. Mindestens eine der Detektionsspulen wirkt als Messspule, deren Messsignal eine Auswerte- und Steuereinheit zur Wegbestimmung auswertet. Hierbei weist der Messwertgeber mindestens eine elektrisch leitfähige Korrekturspur auf, welche mit der mindestens einen Messspur innerhalb einer gemeinsamen Geometrie angeordnet ist, wobei sich entlang des Messwegs erste Bereiche mit mindestens einer Messspur und zweite Bereiche mit mindestens einer Korrekturspur periodisch abwechseln. Mindestens eine der Detektionsspulen wirkt als Korrekturspule, deren Messsignal die Auswerte- und Steuereinheit zur Korrektur der Wegbestimmung auswertet, wobei die Wirkung der einzelnen Detektionsspule als Messspule oder als Korrekturspule entlang des Messwegs variiert. Hierbei ordnet die Auswerte- und Steuereinheit einer Detektionsspule die Wirkung als Messspule zu, wenn die korrespondierende Detektionsspule über einem ersten Bereich positioniert ist, oder die Wirkung als Korrekturspule zu, wenn die korrespondierende Detektionsspule über einem zweiten Bereich positioniert ist. Zudem wird die gemeinsame Geometrie als begrenzte Fläche auf eine Leiterplatte des Targets aufgebracht, wobei die mindestens eine Messspur entlang des Messwegs eine variable Breite aufweist und die mindestens eine Korrekturspur entlang des Messwegs eine konstante Breite aufweist.

Zudem wird ein Verfahren zum Bestimmen einer Relativposition eines Sensors in Bezug auf ein Target einer solchen Sensoranordnung zur berührungslosen Wegerfassung vorgeschlagen. Hierbei wird einer Detektionsspule die Wirkung als Messspule zugeordnet, wenn die korrespondierende Detektionsspule über einem ersten Bereich positioniert ist, oder die Wirkung als Korrekturspule zuordnet, wenn die korrespondierende Detektionsspule über einem zweiten Bereich positioniert ist. Es wird mindestens ein Messsignal der als Korrekturspule wirkenden Detektionsspule gemessen und zur Bestimmung einer räumlichen Lage des Messwertaufnehmers zum Messwertgeber ausgewertet. Zudem wird mindestens ein Messsignal der als Messspule wirkenden Detektionsspule gemessen und basierend auf der bestimmten räumlichen Lage des Messwertaufnehmers zum Messwertgeber korrigiert, wobei aus dem korrigierten Messsignal der als Messspule wirkenden Detektionsspule die Relativposition des Wirbelstromsensors in Bezug auf das Target bestimmt wird.

Das Target kann beispielsweise eine Leiterplatte sein, auf welcher die mindestens eine elektrisch leitfähige Messspur und die mindestens eine elektrisch leitfähige Korrekturspur als eine oder mehrere Leiterbahnen ausgebildet sind. Diese Leiterplatte kann auch aus als flexible Leiterplattenfolie ausgeführt werden. Das Target kann auf einem Bauteil, dessen Bewegung gemessen werden soll, angeordnet werden. Es ist aber auch möglich, dass das Target durch das zu vermessende Bauteil direkt bereitgestellt wird, wenn dieses elektrisch leitfähig ist. Die elektrisch leitfähige Messspur bzw. die elektrisch leitfähige Korrekturspur können beispielsweise als eine Erhöhung auf diesem Bauteil ausgebildet werden.

Der Wirbelstromsensor kann eine Sensorleiterplatte aufweisen, in welcher die Detektionsspulen des Messwertaufnehmers als Planarspulen ausgebildet sind. Auf der Leiterplatte können auch noch weitere Bauelemente, wie beispielsweise die Auswerte- und Steuereinheit, angeordnet werden, welche einen Wechselstrom in den Detektionsspulen induzieren und/oder eine Frequenz der Wechselspannung in diesen Detektionsspulen messen kann.

Der Messwertgeber und der Messwertaufnehmer sind relativ zueinander beweglich. Beispielsweise kann der Messwertgeber auf einer Welle angeordnet werden, die relativ zum Messwertaufnehmer drehbar ist. Alternativ können der Messwertaufnehmer und der Messwertgeber an Bauteilen befestigt werden, die in Richtung des Messwegs zueinander verschiebbar sind.

Mit den Korrekturspulen und den Korrekturspuren können eine Verkippung des Messwertgebers relativ zum Messwertaufnehmer und/oder eine relative Abstandsänderung dieser beiden Komponenten ausgeglichen werden.

Der zu Grunde liegende Messeffekt einer erfindungsgemäßen Sensoranordnung zur berührungslosen Wegerfassung ist die Induktivitätsänderung einer Detektionsspule, wenn sich über dieser ein elektrisch leitfähiges Material (Target) befindet. Wird an die Detektionsspule eine Wechselspannung angelegt, so entsteht ein elektromagnetisches Wechselfeld, welches in dem Target einen Wirbelstrom induziert. Dieser erzeugt ein zum ersten Feld entgegengesetztes Feld, was zu einer reduzierten Induktivität der Sensorspule führt. Wird die Spule in einem elektrischen Schwingkreis verschaltet, ändert sich dadurch die Resonanzfrequenz desselben. Je mehr die Sensorspule vom Target überdeckt wird oder je näher das Target der Sensorspule kommt, desto größer wird die Frequenz des Schwingkreises. Hält man also den Abstand zwischen Sensorspule und Target konstant und strukturiert das Target entlang des Messweges, so ergibt sich eine Frequenzänderung durch Überstreichen der Detektionsspule durch das Target. Eine Messung der Frequenz, beispielsweise durch Zählen oder ein Lock-In Verfahren, erlaubt demnach einen Rückschluss auf die Targetposition. Damit eignen sich Ausführungsformen der Sensoranordnung zur berührungslosen Wegerfassung als Linearwegsensor. Die verwendeten Kondensatoren im Schwingkreis können so gewählt werden, dass die Resonanzfrequenz im Bereich einiger zehn MHz liegt.

Prinzipiell reichen eine Messspule und eine Messspur auf dem Target aus, um den Linearwegsensor zu realisieren. Kommt es allerdings zu einer Abstandsänderung, so wird die resultierende Frequenzänderung bei der Auswertung automatisch auf eine Verschiebung des Targets zurückgeführt. Dies führt zu nicht tolerierbaren Messfehlern. Aus diesem Grund werden zusätzliche Korrekturspuren und Korrekturspulen eingesetzt, über welche die Targetposition relativ zur Sensorplatine bestimmt werden kann (Abstand, Linearweg, Verkippung). Dazu wird mittels einer Kalibrierung bestimmt, wie sich bei jeder Targetposition die Frequenz als Funktion des Abstandes zwischen Target und Sensorplatine verhält. Die Kalibrierdaten können beispielsweise im Speicher eines ASICs oder eines Mikrocontrollers entweder als Look-Up-Table oder in analytischer Form vorliegen.

Unter der Auswerte- und Steuereinheit kann vorliegend ein elektrisches Gerät, wie beispielsweise ein Steuergerät, verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur berührungslosen Wegerfassung und des im unabhängigen Patentanspruch 15 angegebenen Verfahrens zum Bestimmen einer Relativposition eines Sensors in Bezug auf ein Target einer solchen Sensoranordnung zur berührungslosen Wegerfassung möglich.

Besonders vorteilhaft ist, dass der Wirbelstromsensor eine Zuordnungseinrichtung mit mindestens zwei Messelementen umfassen kann, wobei die Auswerte- und Steuereinheit Steuersignale der Messelemente auswerten und in Abhängigkeit der Auswertung bestimmen kann, welche der Detektionsspulen über einem ersten Bereich und welche der Detektionsspulen über einem zweiten Bereich angeordnet ist. Die beiden Messelemente können so entlang des Messwegs hintereinander angeordnet werden, dass die Messelemente bei einer Positionierung über den ersten Bereichen von der mindestens einen Messspur zumindest teilweise überdeckt werden können und bei einer Positionierung über den zweiten Bereichen außerhalb der mindestens einen Korrekturspur angeordnet sind. Die beiden Messelemente können jeweils ein Steuersignal ausgeben, welches einen Überdeckungsgrad des korrespondierenden Messelements mit der mindestens einen Messspur repräsentieren kann. Zudem kann die Auswerte- und Steuereinheit die Steuersignale der Messelemente durch Vergleich mit einem Schwellwert digitalisieren. Die Auswerte- und Steuereinheit kann dem korrespondierenden Steuersignal einen logischen ersten Wert "1" zuordnen, wenn das Steuersignal den Schwellwert erreicht oder übersteigt. Die Auswerte- und Steuereinheit kann dem korrespondierenden Steuersignal einen logischen zweiten Wert zuordnen, wenn das Steuersignal unterhalb des Schwellwerts liegt. Des Weiteren kann die Auswerte- und Steuereinheit in Abhängigkeit der logischen Kombinationen der beiden digitalisierten Steuersignale eine der Detektionsspulen, welche vollständig durch einen der ersten Bereiche überdeckt ist, als Messspule bestimmen, und eine der Detektionsspulen, welche vollständig durch einen der zweiten Bereiche überdeckt ist, als Korrekturspule bestimmen. Eine Entscheidung, welche Detektionsspulen Messspulen und welche Korrekturspulen sind, erfolgt somit anhand der beiden Steuersignale, die von den Messelementen der Zuordnungseinrichtung ausgegeben werden. Entscheidend für die Auswertung ist, welches dieser Messelemente mehr durch eine der Messspuren des Targets überdeckt ist. Ein geeigneter Schwellwert kann beispielsweise als 50% Überdeckung definiert werden. Da zur Zuordnung nur eine binäre bzw. digitale Information, ob die Überdeckung größer oder kleiner als der definierte Schwellwert ist, verwendet wird, können die Messelemente deutlich einfacher ausgeführt werden als die Detektionsspulen. Die Zuordnung der Detektionsspulen als Mess- bzw. Korrekturspulen kann beispielsweise anhand einer Wahrheitstabelle der beiden binären Steuersignale durchgeführt werden.

In vorteilhafter Ausgestaltung der Sensoranordnung können die Messelemente jeweils als Planarspule ausgeführt werden, wobei die mindestens eine elektrisch leitfähige Messspur durch Wirbelstromeffekte die Induktivität der Planarspule des jeweiligen Messelements in Abhängigkeit vom Überdeckungsgrad beeinflussen kann. Die Messung und Auswertung der Induktivitätsänderung kann dann durch Verschaltung in einem elektrischen Schwingkreis durchgeführt werden. Alternativ können die Messelemente jeweils zwei Kondensatorplatten aufweisen, wobei die mindestens eine elektrisch leitfähige Messspur eine kapazitive Kopplung zwischen den beiden Kondensatorplatten des jeweiligen Messelements in Abhängigkeit vom Überdeckungsgrad beeinflussen kann. Bei der alternativen Ausführungsform kann die kapazitive Kopplung gemessen und ausgewertet werden.

In weiterer vorteilhafter Ausgestaltung der Sensoranordnung kann der Messwertaufnehmer vier als Planarspulen mit rechteckigem oder quadratischem Querschnitt ausgeführte Detektionsspulen umfassen, welche in mindestens einer Lage einer Sensorleiterplatte verlaufen können. Zudem können die Detektionsspulen jeweils aus zwei bezüglich des Messwegs beabstandet nebeneinander angeordneten Teilspulen gebildet werden, welche spiegelsymmetrisch zur Mittellängsachse des Messwertgebers angeordnet werden können.

In weiterer vorteilhafter Ausgestaltung der Sensoranordnung kann die begrenzte Fläche vorzugsweise ein gleichschenkliges symmetrisches Trapez ausbilden. Hierbei kann eine Basis des Trapezes senkrecht zum Messweg verlaufen und ungefähr der Länge einer Detektionsspule entsprechen, und eine Höhe des Trapezes kann mindestens einem maximalen Messweg entsprechen. Zudem können die ersten Bereiche und die zweiten Bereiche jeweils ein gleichschenkliges symmetrisches Trapez ausbilden, wobei eine Basis der Trapeze jeweils senkrecht zum Messweg verlaufen kann und die Höhe der Trapeze jeweils mindestens der doppelten Breite einer Detektionsspule entsprechen kann. Des Weiteren können die ersten Bereiche jeweils im Wesentlichen von einer Messspur bedeckt werden, und die zweiten Bereiche können jeweils zwei Korrekturspuren aufweisen, welche spiegelsymmetrisch zur Mittellängsachse des Messwertgebers angeordnet werden können.

In weiterer vorteilhafter Ausgestaltung der Sensoranordnung kann der Wirbelstromsensor ein Linearwegsensor sein und das Target kann entlang einem linearen Messweg angeordnet werden. Alternativ kann der Wirbelstromsensor ein Drehwinkelsensor sein und das Target kann auf einer Welle um eine Drehachse angeordnet werden.

In vorteilhafter Ausgestaltung des Verfahrens kann aus der Relativposition des Wirbelstromsensors in Bezug auf das Target ein zurückgelegter Weg oder ein Drehwinkel berechnet werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

Kurze Beschreibung der Zeichnungen

Fig. 1 zeigt ein schematisches Blockschaltbild eines Ausführungsbeispiels einer erfindungsgemäßen Sensoranordnung zur berührungslosen Wegerfassung.

Fig. 2 zeigt eine schematische Draufsicht auf die erfindungsgemäße Sensoranordnung zur berührungslosen Wegerfassung aus Fig. 1 mit einer transparent dargestellten Sensorleiterplatte.

Fig. 3 zeigt eine Draufsicht auf ein Ausführungsbeispiel einer Teilspule der erfindungsgemäßen Sensoranordnung zur berührungslosen Wegerfassung aus Fig. 1 und 2.

Fig. 4 zeigt ein Kennliniendiagramm, welches eine Abhängigkeit eines Messsignals von einem Abstand zwischen einem Target und einer Detektionsspule darstellt.

Fig. 5 zeigt eine schematische Darstellung eines Ausschnitts der erfindungsgemäßen Sensoranordnung zur berührungslosen Wegerfassung aus Fig. 1 und 2, mit einem ersten Ausführungsbeispiel einer Zuordnungseinrichtung.

Fig. 6 zeigt eine schematische Darstellung eines Ausschnitts der erfindungsgemäßen Sensoranordnung zur berührungslosen Wegerfassung aus Fig. 1 und 2, mit einem zweiten Ausführungsbeispiel der Zuordnungseinrichtung in einem ersten Überdeckungszustand.

Fig. 7 zeigt eine schematische Darstellung eines Ausschnitts der erfindungsgemäßen Sensoranordnung zur berührungslosen Wegerfassung aus Fig. 1 und 2, mit einem zweiten Ausführungsbeispiel der Zuordnungseinrichtung in einem zweiten Überdeckungszustand.

Fig. 8 zeigt ein Kennliniendiagramm mit typischen Signalverläufen eines ersten Steuersignals und eines zweiten Steuersignals der Zuordnungseinrichtung über einem Messweg.

Fig. 9 zeigt ein Kennliniendiagramm mit typischen Signalverläufen von Überdeckungsgraden, welche aus Messsignalen der Detektionsspulen berechnet wurden, und von Steuersignalen der Messelemente der Zuordnungseinrichtung über den Messweg.

Fig. 10 zeigt ein Kennliniendiagramm eines Rohsignals, welches sich aus den einzelnen Überdeckungsgraden zusammensetzt, welche aus korrespondierenden über den Messweg von als Messspulen wirkenden Detektionsspulen erfassten Messsignalen berechnet wurden.

Fig. 11 zeigt ein Kennliniendiagramm eines Positionssignals nach Korrektur der bekannten Positionsoffsets der jeweiligen Detektionsspulen und Zuordnung von Rohsignal und Position.

Ausführungsformen der Erfindung

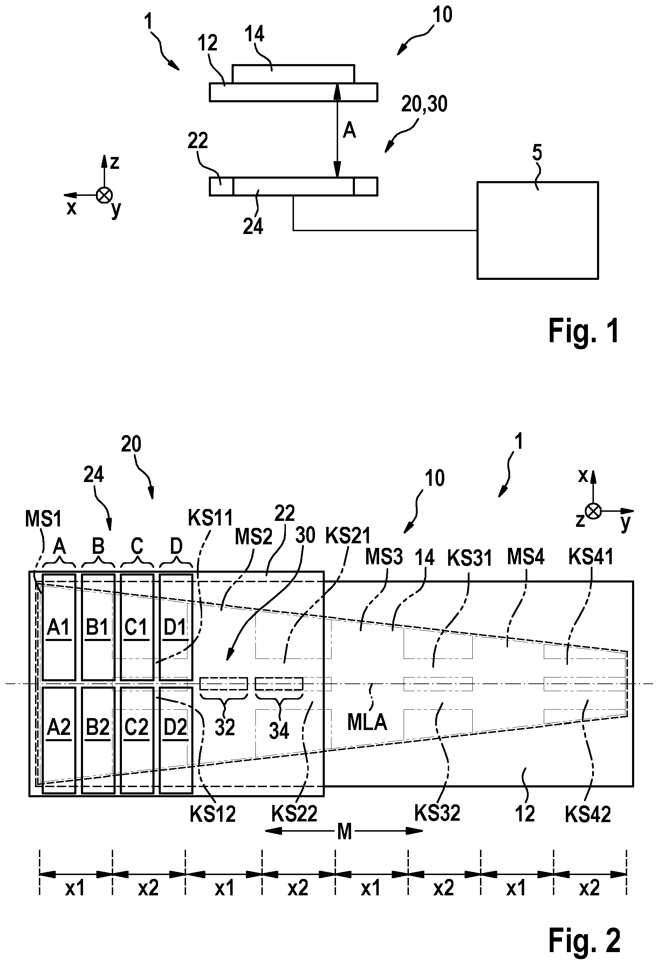

Wie aus Fig. 1 und 2 ersichtlich ist, umfasst das dargestellte Ausführungsbeispiel einer erfindungsgemäßen Sensoranordnung 1 zur berührungslosen Wegerfassung ein Target 10, welches einen entlang eines Messwegs M verlaufenden Messwertgeber 14 mit mindestens einer elektrisch leitfähigen Messspur MS1, MS2, MS3, MS4 aufweist, und einen Wirbelstromsensor 20 mit einem Messwertaufnehmer 22, welcher mindestens zwei Detektionsspulen A, B, C, D umfasst. Der Messwertaufnehmer 22 ist mit einem Abstand A beabstandet zum Messwertgeber 14 und relativ beweglich entlang der mindestens einen elektrisch leitfähigen Messspur MS1, MS2, MS3, MS4 angeordnet und überdeckt diese zumindest teilweise. Mindestens eine der Detektionsspulen A, B, C, D wirkt als Messspule, deren Messsignal eine Auswerte- und Steuereinheit 5 zur Wegbestimmung auswertet. Hierbei weist der Messwertgeber 14 mindestens eine elektrisch leitfähige Korrekturspur KS11, KS12, KS21, KS22, KS31, KS32, KS41, KS42 auf, welche mit der mindestens einen elektrisch leitfähigen Messspur MS1, MS2, MS3, MS4 innerhalb einer gemeinsamen Geometrie angeordnet ist, wobei sich entlang des Messwegs M erste Bereiche x1 mit mindestens einer elektrisch leitfähigen Messspur MS1, MS2, MS3, MS4 und zweite Bereiche x2 mit mindestens einer elektrisch leitfähigen Korrekturspur KS11, KS12, KS21, KS22, KS31, KS32, KS41, KS42 periodisch abwechseln. Mindestens eine der Detektionsspulen A, B, C, D wirkt als Korrekturspule, deren Messsignal die Auswerte- und Steuereinheit 5 zur Korrektur der Wegbestimmung auswertet. Die Wirkung der einzelnen Detektionsspule A, B, C, D als Messspule oder als Korrekturspule entlang des Messwegs M variiert, wobei die Auswerte- und Steuereinheit 5 einer Detektionsspule A, B, C, D die Wirkung als Messspule zuordnet, wenn die korrespondierende Detektionsspule A, B, C, D über einem ersten Bereich x1 positioniert ist, oder die Wirkung als Korrekturspule zuordnet, wenn die korrespondierende Detektionsspule A, B, C, D über einem zweiten Bereich x2 positioniert ist.

Der zu Grunde liegende Messeffekt der erfindungsgemäßen Sensoranordnung 1 zur berührungslosen Wegerfassung ist die Induktivitätsänderung einer Detektionsspule A, B, C, D, wenn sich über dieser ein elektrisch leitfähiges Material in Form einer elektrisch leitfähigen Messspur MS1, MS2, MS3, MS4 oder einer elektrisch leitfähigen Korrekturspur KS11, KS12, KS21, KS22, KS31, KS32, KS41, KS42 befindet. Wird an die Detektionsspule A, B, C, D eine Wechselspannung angelegt, so entsteht ein elektromagnetisches Wechselfeld, welches in der elektrisch leitfähigen Messspur MS1, MS2, MS3, MS4 und/oder der elektrisch leitfähigen Korrekturspur KS11, KS12, KS21, KS22, KS31, KS32, KS41, KS42 einen Wirbelstrom induziert. Dieser erzeugt ein zum ersten Feld entgegengesetztes Feld, was zu einer reduzierten Induktivität der Detektionsspule A, B, C, D führt. Wird die Detektionsspule A, B, C, D in einem elektrischen Schwingkreis verschaltet, ändert sich dadurch die Resonanzfrequenz $f_0$ desselben gemäß Gleichung (1).

$$f_0 = \frac{1}{2\pi\sqrt{LC}} \qquad (1)$$

Je mehr die Detektionsspule A, B, C, D von der elektrisch leitfähigen Messspur MS1, MS2, MS3, MS4 und/oder der elektrisch leitfähigen Korrekturspur KS11, KS12, KS21, KS22, KS31, KS32, KS41, KS42 überdeckt wird oder je näher die elektrisch leitfähige Messspur MS1, MS2, MS3, MS4 und/oder die elektrisch leitfähige Korrekturspur KS11, KS12, KS21, KS22, KS31, KS32, KS41, KS42 der Detektionsspule A, B, C, D kommt, desto größer wird die Frequenz des Schwingkreises. Hält man also den Abstand A zwischen Target 10 und Wirbelstromsensor 20 konstant und strukturiert das Target 10 entlang des Messwegs A, so ergibt sich eine Frequenzänderung durch Überstreichen der Detektionsspule A, B, C, D durch die elektrisch leitfähige Messspur MS1, MS2, MS3, MS4 und/oder der elektrisch leitfähigen Korrekturspur KS11, KS12, KS21, KS22, KS31, KS32, KS41, KS42. Eine Messung der Frequenz beispielsweise durch Zählen oder ein Lock-In Verfahren erlaubt demnach einen Rückschluss auf die Targetposition. Damit eignet sich die erfindungsgemäße Sensoranordnung 1 zur berührungslosen Wegerfassung als Linearwegsensor oder als Drehwinkelsensor. Die verwendeten Kondensatoren werden so gewählt, dass eine Frequenz im Bereich von 10 bis 100 MHz erreicht wird.

Wie aus Fig. 2 weiter ersichtlich ist, ist die gemeinsame Geometrie als begrenzte Fläche auf eine Leiterplatte 12 des Targets 10 aufgebracht. Die mindestens eine Messspur MS1, MS2, MS3, MS4 weist entlang des Messwegs M eine variable Breite auf und die mindestens eine Korrekturspur KS11, KS12, KS21, KS22, KS31, KS32, KS41, KS42 weist entlang des Messwegs M eine konstante Breite auf. Im dargestellten Ausführungsbeispiel wechseln sich vier erste Bereiche x1 mit vier zweiten Bereichen x2 periodisch ab. Die äußere gestrichelt dargestellte Kontur des Messwertgebers 14 entspricht im dargestellten Ausführungsbeispiel einem Trapez, dessen Basis senkrecht zur Messrichtung (y-Richtung) bzw. zum Messweg M orientiert ist. Die Basis weist dabei eine Länge auf, welche in etwa der Länge einer Detektionsspule A, B, C, D in x-Richtung entspricht und im Bereich von wenigen Millimetern bis mehrere Zentimeter liegen kann. Die Höhe des Trapezes entspricht mindestens einem maximalen Messweg M von wenigen Zentimetern bis zu einigen Dezimeter. Die der Basis gegenüber liegende Seite des Trapezes ist entsprechend kürzer als die Basis ausgebildet und sollte etwa 10% der Länge der Detektionsspule A, B, C, D nicht unterschreiten. Innerhalb der von der äußeren Kontur begrenzten Fläche befinden sich periodisch Aussparungen, so dass sich in den zweiten Bereichen x2 jeweils zwei Korrekturspuren KS11, KS12, KS21, KS22, KS31, KS32, KS41, KS42 ausbilden, deren Breiten identisch sind und sich nicht in Abhängigkeit der y-Position bzw. entlang des Messwegs M ändern. Zudem sind die jeweils zwei Korrekturspuren KS11, KS12, KS21, KS22, KS31, KS32, KS41, KS42 der zweiten Bereiche x2 spiegelsymmetrisch zur Mittellängsachse MLA des Messwertgebers 14 angeordnet. Die ersten Bereiche x1 und die zweiten Bereiche x2 bilden jeweils auch ein gleichschenkliges symmetrisches Trapez aus, deren Basis jeweils senkrecht zum Messweg M verläuft. Die Höhe der Trapeze bzw. die Länge in y-Richtung der ersten und zweiten Bereiche x1, x2 entspricht jeweils

**EP 3 455 592 B1**

mindestens der doppelten Breite einer Detektionsspule A, B, C, D in y-Richtung. Zudem sind die ersten Bereiche x1 jeweils im Wesentlichen von einer elektrisch leitfähigen Messspur MS1, MS2, MS3, MS4 bedeckt sind, deren Breite in Messrichtung y abnimmt.

Durch die dargestellte Anordnung von vier in Messrichtung y nebeneinander angeordneten Detektionsspulen A, B, C, D, welche jeweils als Spulenpaar mit zwei Teilspulen A1, A2, B1, B2, C1, C2, D1, D2 ausgeführt sind, können nun die ersten Bereiche x1 zur Positionsbestimmung, also der eigentlichen Linearwegmessung, und die zweiten Bereiche x2 zur Kompensation bzw. Korrektur von Toleranzen verwendet werden. Da die Übergangsbereiche zwischen den ersten Bereichen x1 und den zweiten Bereichen x2 keine Informationen über den Messweg noch über Toleranzen enthalten, werden im dargestellten Ausführungsbeispiel vier Detektionsspulen A, B, C, D bzw. acht Teilspulen A1, A2, B1, B2, C1, C2, D1, D2 verwendet, um alle Messgrößen immer sicher zu bestimmen.

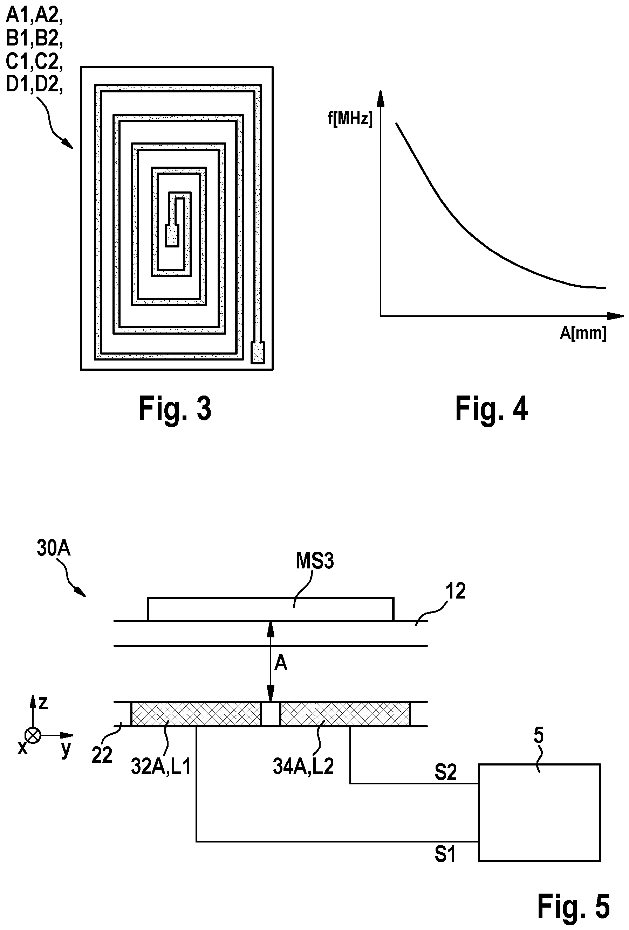

Wie aus Fig. 2 weiter ersichtlich ist, sind die vier Detektionsspulen A, B, C, D jeweils aus zwei bezüglich des Messwegs M beabstandet nebeneinander angeordneten Teilspulen A1, A2, B1, B2, C1, C2, D1, D2 gebildet, welche spiegelsymmetrisch zur Mittellängsachse MLA des Messwertgebers 14 angeordnet sind. Wie aus Fig. 3 weiter ersichtlich ist, sind die Teilspulen A1, A2, B1, B2, C1, C2, D1, D2 der vier Detektionsspulen A, B, C, D des Messwertaufnehmer 22 jeweils als Planarspulen mit rechteckigem oder quadratischen Querschnitt ausgeführt, welche in mindestens einer Lage einer Sensorleiterplatte 22 verlaufen. Die äußeren Abmessungen der Teilspulen A1, A2, B1, B2, C1, C2, D1, D2 können wenige Millimeter bis wenige Zentimeter betragen.

Zu jeder Targetposition wird das Messsignal und/oder Frequenzsignal einer Detektionsspule A, B, C, D bzw. werden die Messsignale und/oder Frequenzsignale der korrespondierenden zwei Teilspulen A1, A2, B1, B2, C1, C2, D1, D2, welche sich vollständig über einem ersten Bereich x1 befindet, für die Messung der Targetposition ausgewertet. Das Messsignal und/oder Frequenzsignal einer weiteren Detektionsspule A, B, C, D bzw. die Messsignale und/oder Frequenzsignale der korrespondierenden zwei Teilspulen A1, A2, B1, B2, C1, C2, D1, D2, welche sich vollständig über einem zweiten Bereich x2 befindet, wird bzw. werden zur Toleranzkorrektur verwendet.

Für die in Fig. 2 dargestellte Targetposition werden eine erste Detektionsspule A für die Wegmessung und eine dritte Detektionsspule C für die Toleranzkompensation verwendet. Befindet sich das Target 10 bzw. der Messwertgeber 14 in seinem Sollabstand A von ca. 0,5 mm und ist das Target 10 bzw. der Messwertgeber 14 nicht um die Achse (y-Achse) entlang des Messwegs M verkippt, weisen beide Frequenzsignale der Teilspulen C1, C2 der dritten Detektionsspule C nahezu identische Sollwerte fsoll auf, so dass keine Korrektur der von den beiden Teilspulen A1, A2 der ersten Detektionsspule A ausgegebenen Frequenzsignale durchgeführt wird. Sind beide Frequenzen größer als der Sollwert fsoll und nahezu identisch, ist das Target 10 näher an der Sensorleiterplatte 22 als der Sollabstand A und die Messfrequenzen der Teilspulen A1, A2 der ersten Detektionsspule A müssen nach unten korrigiert werden. Eine Verkippung um die y-Achse sorgt dafür, dass sich die Messfrequenzen der Teilspulen C1, C2 der dritten Detektionsspule C unterscheiden. Aufgrund des nichtlinearen Zusammenhangs zwischen der Messfrequenz und dem Abstand A gemäß Kennlinie in Fig. 4, ist auch hier eine Korrektur erforderlich. Eine Entscheidung, welche Detektionsspule A, B, C, D als Messspule und welche als Korrekturspule wirkt, erfolgt anhand zweier Steuersignale S1, S2, welche von Messelementen 32, 34 einer Zuordnungseinrichtung 30 erfasst werden.

Wie aus Fig. 2 weiter ersichtlich ist, sind die beiden Messelemente 32, 34 so entlang des Messwegs M hintereinander angeordnet, dass die Messelemente 32, 34 bei einer Positionierung über den ersten Bereichen x1 von der mindestens einen Messspur MS1, MS2, MS3, MS4 zumindest teilweise überdeckt sind und bei einer Positionierung über den zweiten Bereichen x1 außerhalb der mindestens einen Korrekturspur KS11, KS12, KS21, KS22, KS31, KS32, KS41, KS42 angeordnet sind. Die beiden Messelemente 32, 34 geben jeweils ein Steuersignal S1, S2 aus, welches einen Überdeckungsgrad des korrespondierenden Messelements 32, 34 mit der mindestens einen Messspur MS1, MS2, MS3, MS4 repräsentiert. Die zwei Messelementen 32, 34 der Zuordnungseinrichtung 30 sind auf der Sensorleiterplatte 22 des Wirbelstromsensors 20 angeordnet. Die Auswerte- und Steuereinheit 5 wertet die Steuersignale S1, S2 der Messelemente 32, 34 aus und bestimmt in Abhängigkeit der Auswertung, welche der Detektionsspulen A, B, C, D über einem ersten Bereich x1 und welche der Detektionsspulen über einem zweiten Bereich x2 angeordnet ist. Entscheidend für die Auswertung ist, welches dieser Messelemente 32, 34 mehr durch die elektrisch leitfähige Messspur MS1, MS2, MS3, MS4 überdeckt ist. Ein geeigneter Schwellwert S kann beispielsweise als 50% Überdeckung definiert werden. Aufgrund der verwendeten binären Information, ob die Überdeckung größer oder kleiner als der definierte Schwellwert S ist, können die Messelemente 32, 34 deutlich einfacher ausgeführt werden als die Detektionsspulen A, B, C, D.

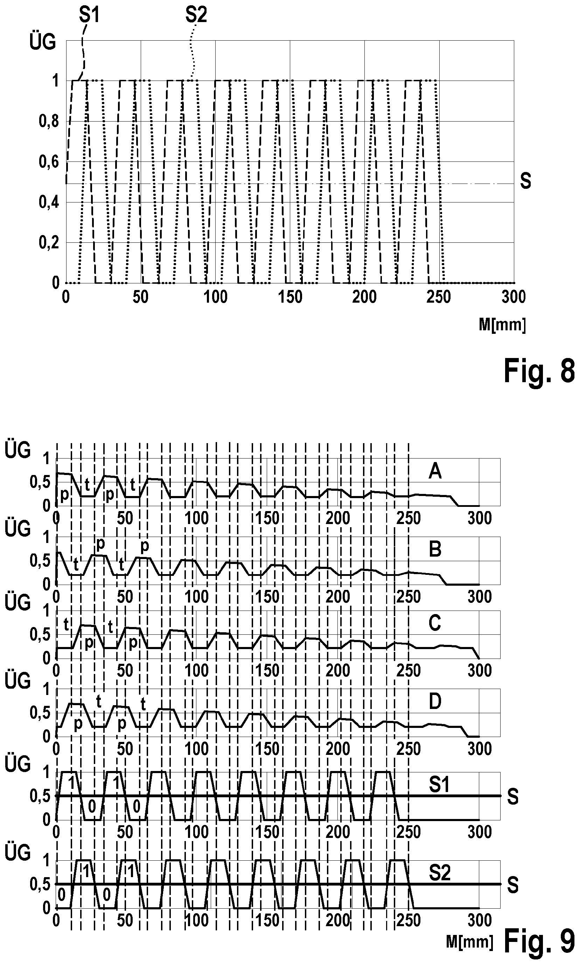

Die Auswerte- und Steuereinheit 5 digitalisiert die Steuersignale S1, S2 der Messelemente 32, 34 durch Vergleich mit dem Schwellwert S, welcher im dargestellten Ausführungsbeispiel 50% Überdeckung ÜG entspricht. Fig. 8 und 9 zeigen jeweils den Verlauf der beiden Steuersignale S1, S2. Die Auswerte- und Steuereinheit 5 ordnet dem korrespondierenden Steuersignal S1, S2 einen logischen ersten Wert "1" zu, wenn das Steuersignal S1, S2 bzw. die Überdeckung ÜG den Schwellwert S erreicht oder übersteigt. Die Auswerte- und Steuereinheit 5 ordnet dem korrespondierenden Steuersignal S1, S2 einen logischen zweiten Wert "0" zu, wenn das Steuersignal S1, S2 bzw. die Überdeckung ÜG unterhalb des Schwellwerts S liegt. Die Auswerte- und Steuereinheit 5 bestimmt in Abhängigkeit der logischen Kombinationen der digitalisierten Steuersignale S1, S2, welche in einer Wahrheitstabelle 1 dargestellt sind, eine der Detektionsspulen A, B, C, D, welche vollständig durch einen der ersten Bereiche x1 überdeckt ist, als Messspule, und eine der Detektionsspulen A, B, C, D, welche vollständig durch einen der zweiten Bereiche x2 überdeckt ist, als Korrekturspule. Die Zuordnung der Detektionsspulen A, B, C, D als Mess- bzw. Korrekturspulen erfolgt anhand der Wahrheitstabelle 1, wobei S den Schwellwert der Überdeckung der Messelementelemente 32, 34 mit einer der elektrisch leitfähigen Messspuren MS1, MS2, MS3, MS4 angibt.

Wahrheitstabelle 1

| S1 | S2 | Messspule | Korrekturspule |
|----|----|-----------|----------------|
| < S | < S | D | B |
| < S | > S | C | A |
| > S | > S | B | D |
| > S | < S | A | C |

Wie aus Fig. 2 weiter ersichtlich ist, ist in der dargestellten Relativposition zwischen dem Target 10 und dem Wirbelstromsensor 20, welche im dargestellten Ausführungsbeispiel einer Ausgangsposition entspricht, die erste Detektionsspule A vollständig von einem linken Rand der gemeinsamen Geometrie angeordneten ersten Bereich x1 überdeckt und eine zweite Detektionsspule B liegt im Übergangsbereich zwischen dem am Rand angeordneten ersten Bereich x1 und einem nachfolgenden zweiten Bereich x2 und wird teilweise vom ersten Bereich x1 und teilweise vom zweiten Bereich x2 überdeckt. Zudem ist die dritte Detektionsspule C vollständig vom zweiten Bereich x2 überdeckt und eine vierte Detektionsspule D liegt im Übergangsbereich zwischen dem zweiten Bereich x1 und einem nachfolgenden ersten Bereich x1 und wird teilweise vom zweiten Bereich x2 und teilweise vom ersten Bereich x1 überdeckt. Das erste Messelement 32 ist in einem nachfolgenden ersten Bereich x1 angeordnet und wird vollständig von diesem ersten Bereich x1 überdeckt, so dass das binäre erste Steuersignal S1 den logischen ersten Wert "1" aufweist. Das zweite Messelement 43 ist in einem nachfolgenden zweiten Bereich x2 angeordnet und wird vollständig von diesem zweiten Bereich x2 überdeckt, so dass das binäre zweite Steuersignal S2 den logischen zweiten Wert "0" aufweist.

Wie aus Fig. 5 weiter ersichtlich ist, sind die Messelemente 32A, 34A im dargestellten ersten Ausführungsbeispiel der Zuordnungseinrichtung 30A jeweils als Planarspule L1, L2 ausgeführt, welche in mindestens einer Lage der Sensorleiterplatte 22 angeordnet sind. Die mindestens eine elektrisch leitfähige Messspur MS1, MS2, MS3, MS4 beeinflusst durch Wirbelstromeffekte die Induktivität der Planarspule L1, L2 des jeweiligen Messelements 32A, 34A in Abhängigkeit vom Überdeckungsgrad ÜG.

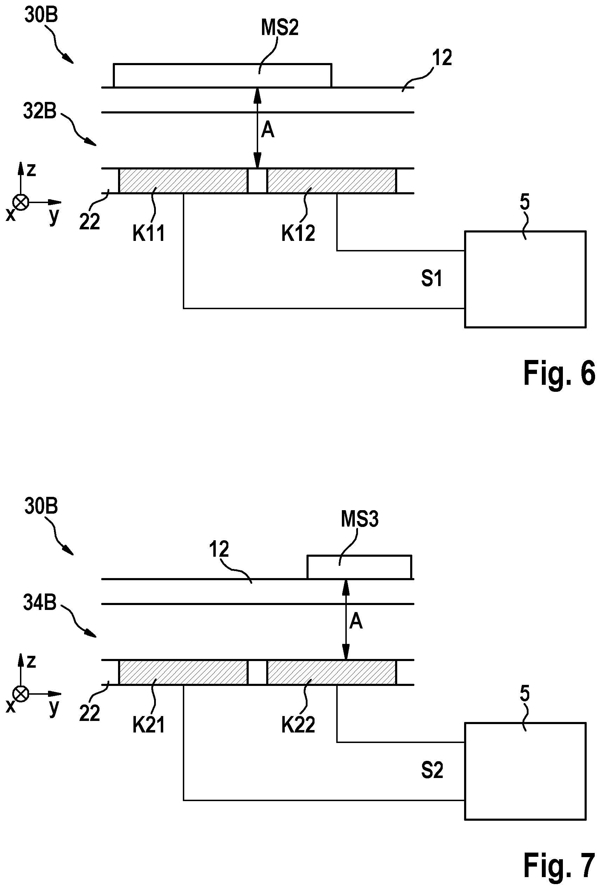

Wie aus Fig. 6 und 7 weiter ersichtlich ist, weisen die Messelemente 32B, 34B im dargestellten zweiten Ausführungsbeispiel der Zuordnungseinrichtung 30B jeweils zwei Kondensatorplatten K11, K12, K21, K22 auf, welche in Messrichtung (y-Richtung) nebeneinander in die Sensorleiterplatte 22 eingebettet sind. Die mindestens eine Messspur MS1, MS2, MS3, MS4 beeinflusst eine kapazitive Kopplung zwischen den beiden Kondensatorplatten K11, K12, K21, K22 des jeweiligen Messelements 32B, 34B in Abhängigkeit vom Überdeckungsgrad. Wie aus Fig. 6 weiter ersichtlich ist, tritt durch die elektrisch leitfähige Messspur MS2, welche eine erste Kondensatorplatte K11 vollständig und eine zweite Kondensatorplatte K12 des ersten Messelements 32B teilweise überdeckt, eine kapazitive Kopplung zwischen der ersten und zweiten Kondensatorplatte K11, K12 auf. Wie aus Fig. 7 weiter ersichtlich ist, überdeckt die elektrisch leitfähige Messspur MS3 eine erste Kondensatorplatte K21 gar nicht und eine zweite Kondensatorplatte K22 des zweiten Messelements 34B nur teilweise, so dass keine kapazitive Kopplung zwischen der ersten und zweiten Kondensatorplatte K21, K22 vorliegt. Die gemessene kapazitive Kopplung ist ein Maß für die Überdeckung des ersten Messelements 32B bzw. des zweiten Messelements 34B.

Fig. 9 zeigt typische Signalverläufe von Überdeckungsgraden ÜG, welche aus den Messsignalen der Detektionsspulen A, B, C, D berechnet wurden, und von Steuersignalen S1, S2 der Messelemente 32, 34 der Zuordnungseinrichtung 30 über den Messweg M sowie die Zuordnung der Detektionsspulen A, B, C, D zur Messfunktion p oder zur Korrekturfunktion t durch die binär digitalisierten Steuersignale gemäß Wahrheitstabelle 1.

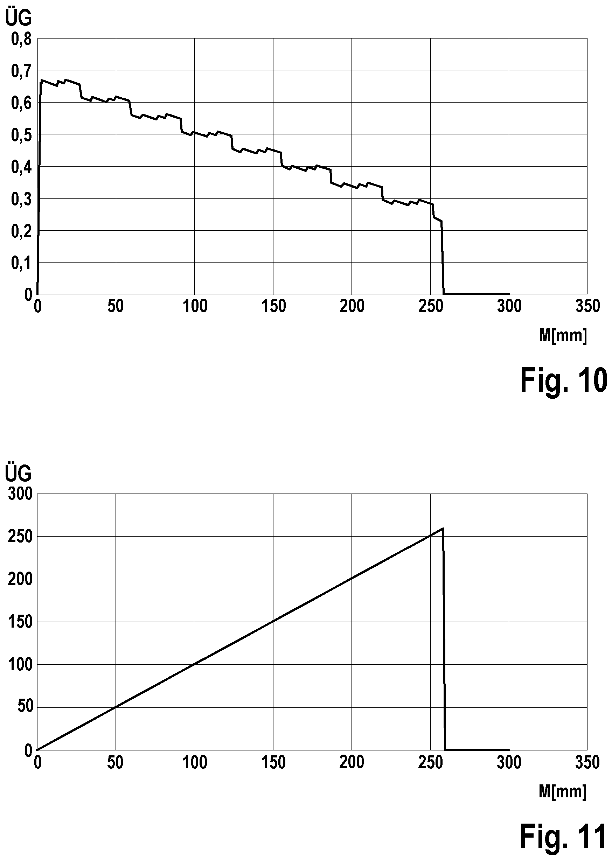

Fig. 10 zeigt ein Kennliniendiagramm eines Rohsignals, welches sich aus den einzelnen Überdeckungsgraden ÜG zusammensetzt, welche aus korrespondierenden über den Messweg M von als Messspulen wirkenden Detektionsspulen A, B, C, D erfassten Messsignalen berechnet wurden. Fig. 11 zeigt ein Positionssignals nach Korrektur der bekannten Positionsoffsets der jeweiligen Detektionsspulen A, B, C, D und Zuordnung von Rohsignal und Position.

Das Verfahren zum Bestimmen einer Relativposition eines Wirbelstromsensors 20 in Bezug auf ein Target 10 einer oben beschriebenen Sensoranordnung 1 zur berührungslosen Wegerfassung ordnet einer Detektionsspule A, B, C, D die Wirkung als Messspule zu, wenn die korrespondierende Detektionsspule A, B, C, D über einem ersten Bereich x1 positioniert ist, oder die Wirkung als Korrekturspule zu, wenn die korrespondierende Detektionsspule A, B, C, D über einem zweiten Bereich x2 positioniert ist. Mindestens ein Messsignal der als Korrekturspule wirkenden Detektionsspule A, B, C, D wird gemessen und zur Bestimmung einer räumli-

**EP 3 455 592 B1**

chen Lage des Messwertaufnehmers 24 zum Messwertgeber 14 ausgewertet. Mindestens ein Messsignal der als Messspule wirkenden Detektionsspule A, B, C, D wird gemessen und basierend auf der bestimmten räumlichen Lage des Messwertaufnehmers 24 zum Messwertgeber 14 korrigiert, wobei aus dem korrigierten Messsignal der als Messspule wirkenden Detektionsspule A, B, C, D die Relativposition des Wirbelstromsensors 20 in Bezug auf das Target (10) bestimmt wird.

Aus der Relativposition des Wirbelstromsensors 20 in Bezug auf das Target 10 kann dann ein zurückgelegter Weg oder ein Drehwinkel berechnet werden.

Dieses Verfahren kann beispielsweise in Software oder Hardware oder in einer Mischform aus Software und Hardware beispielsweise in einer Auswerte- und Steuereinheit 5 oder in einem Steuergerät implementiert sein.

**Patentansprüche**

1. Sensoranordnung (1) zur berührungslosen Wegerfassung mit einem Target (10), welches einen entlang eines Messwegs (M) verlaufenden Messwertgeber (14) mit mindestens einer elektrisch leitfähigen Messspur (MS1, MS2, MS3, MS4) aufweist, und einem Wirbelstromsensor (20) mit einem Messwertaufnehmer (22), welcher mindestens zwei Detektionsspulen (A, B, C, D) umfasst, wobei der Messwertaufnehmer (22) beabstandet zum Messwertgeber (14) und relativ beweglich entlang der mindestens einen elektrisch leitfähigen Messspur (MS1, MS2, MS3, MS4) angeordnet ist und diese zumindest teilweise überdeckt, wobei mindestens eine der Detektionsspulen (A, B, C, D) als Messspule wirkt, deren Messsignal eine Auswerte- und Steuereinheit (5) zur Wegbestimmung auswertet, wobei mindestens eine der Detektionsspulen (A, B, C, D) als Korrekturspule wirkt, deren Messsignal die Auswerte- und Steuereinheit (5) zur Korrektur der Wegbestimmung auswertet, **dadurch gekennzeichnet, dass** der Messwertgeber (14) mindestens eine elektrisch leitfähige Korrekturspur (KS11, KS12, KS21, KS22, KS31, KS32, KS41, KS42) aufweist, welche mit der mindestens einen Messspur (MS1, MS2, MS3, MS4) innerhalb einer gemeinsamen Geometrie angeordnet ist, welche als begrenzte Fläche auf eine Leiterplatte (12) des Targets (10) aufgebracht ist, wobei die mindestens eine elektrisch leitfähige Messspur (MS1, MS2, MS3, MS4) entlang des Messwegs (M) eine variable Breite aufweist und die mindestens eine elektrisch leitfähige Korrekturspur (KS11, KS12, KS21, KS22, KS31, KS32, KS41, KS42) entlang des Messwegs (M) eine konstante Breite aufweist, wobei sich entlang des Messwegs (M) erste Bereiche (x1) mit mindestens einer Messspur (MS1, MS2, MS3, MS4) und zweite Bereiche (x2) mit mindestens einer Korrekturspur (KS11, KS12, KS21, KS22, KS31, KS32, KS41, KS42) periodisch abwechseln, wobei die Wirkung der einzelnen Detektionsspule (A, B, C, D) als Messspule oder als Korrekturspule entlang des Messwegs (M) variiert, wobei die Auswerte- und Steuereinheit (5) einer Detektionsspule (A, B, C, D) die Wirkung als Messspule zuordnet, wenn die korrespondierende Detektionsspule (A, B, C, D) über einem ersten Bereich (x1) positioniert ist, oder die Wirkung als Korrekturspule zuordnet, wenn die korrespondierende Detektionsspule (A, B, C, D) über einem zweiten Bereich (x2) positioniert ist.

2. Sensoranordnung nach Anspruch 1, **dadurch gekennzeichnet, dass** der Wirbelstromsensor (20) eine Zuordnungseinrichtung (30) mit mindestens zwei Messelementen (32, 34) umfasst, wobei die Auswerte- und Steuereinheit (5) Steuersignale (S1, S2) der Messelemente (32, 34) auswertet und in Abhängigkeit der Auswertung bestimmt, welche der Detektionsspulen (A, B, C, D) über einem ersten Bereich (x1) und welche der Detektionsspulen über einem zweiten Bereich (x2) angeordnet ist.

3. Sensoranordnung nach Anspruch 2, **dadurch gekennzeichnet, dass** die beiden Messelemente (32, 34) so entlang des Messwegs (M) hintereinander angeordnet sind, dass die Messelemente (32, 34) bei einer Positionierung über den ersten Bereichen (x1) von der mindestens einen Messspur (MS1, MS2, MS3, MS4) zumindest teilweise überdeckt sind und bei einer Positionierung über den zweiten Bereichen (x1) außerhalb der mindestens einen Korrekturspur (KS11, KS12, KS21, KS22, KS31, KS32, KS41, KS42) angeordnet sind, wobei die beiden Messelemente (32, 34) jeweils ein Steuersignal (S1, S2) ausgeben, welches einen Überdeckungsgrad des korrespondierenden Messelements mit der mindestens einen Messspur (MS1, MS2, MS3, MS4) repräsentiert.

4. Sensoranordnung nach Anspruch 3, **dadurch gekennzeichnet, dass** die Auswerte- und Steuereinheit (5) die Steuersignale (S1, S2) der Messelemente (32, 34) durch Vergleich mit einem Schwellwert (S) digitalisiert, wobei die Auswerte- und Steuereinheit (5) dem korrespondierenden Steuersignal (S1, S2) einen logischen ersten Wert "1" zuordnet, wenn das Steuersignal (S1, S2) den Schwellwert (S) erreicht oder übersteigt, und wobei die Auswerte- und Steuereinheit (5) dem korrespondierenden Steuersignal (S1, S2) einen logischen zweiten Wert "0" zuordnet ist, wenn das Steuersignal (S1, S2) unterhalb des Schwellwerts (S) liegt.

5. Sensoranordnung nach Anspruch 4, **dadurch gekennzeichnet, dass** die Auswerte- und Steuereinheit (5) in Abhängigkeit der logischen Kombinationen der digitalisierten Steuersignale (S1, S2) eine der Detektionsspulen (A, B, C, D), welche vollständig durch einen der ersten Bereiche (x1) überdeckt ist, als Messspule bestimmt, und eine der Detektionsspulen (A, B, C, D), welche vollständig durch einen der zweiten Bereiche (x2) überdeckt ist, als Korrekturspule bestimmt.

6. Sensoranordnung nach einem der Ansprüche 2 bis 5, **dadurch gekennzeichnet, dass** die Messelemente (32A, 34A) jeweils als Planarspule (L1, L2) ausgeführt sind, wobei die mindestens eine elektrisch leitfähige Messspur (MS1, MS2, MS3, MS4) durch Wirbelstromeffekte die Induktivität der Planarspule (L1, L2) des jeweiligen Messelements (32A, 34A) in Abhängigkeit vom Überdeckungsgrad beeinflusst.

7. Sensoranordnung nach einem der Ansprüche 2 bis 5, **dadurch gekennzeichnet, dass** die Messelemente (32B, 34B) jeweils zwei Kondensatorplatten (K11, K12, K21, K22) aufweisen, wobei die mindestens eine Messspur (MS1, MS2, MS3, MS4) eine kapazitive Kopplung zwischen den beiden Kondensatorplatten (K11, K12, K21, K22) des jeweiligen Messelements (32B, 34B) in Abhängigkeit vom Überdeckungsgrad beeinflusst.

8. Sensoranordnung nach einem der Ansprüche 1 bis 7, **dadurch gekennzeichnet, dass** der Messwertaufnehmer (22) vier als Planarspulen mit rechteckigem oder quadratischen Querschnitt ausgeführte Detektionsspulen (A, B, C, D) umfasst, welche in mindestens einer Lage einer Sensorleiterplatte (22) verlaufen.

9. Sensoranordnung nach einem der Ansprüche 1 bis 7, **dadurch gekennzeichnet, dass** die Detektionsspulen (A, B, C, D) jeweils aus zwei bezüglich des Messwegs (M) beabstandet nebeneinander angeordneten Teilspulen (A1, A2, B1, B2, C1, C2, D1, D2) gebildet sind, welche spiegelsymmetrisch zur Mittellängsachse (MLA) des Messwertgebers (14) angeordnet sind.

10. Sensoranordnung nach einem der Ansprüche 1 bis 9, **dadurch gekennzeichnet, dass** die begrenzte Fläche ein gleichschenkliges symmetrisches Trapez ausbildet, wobei eine Basis des Trapezes senkrecht zum Messweg (M) verläuft und ungefähr der Länge einer Detektionsspule (A, B, C, D) entspricht, und eine Höhe des Trapezes mindestens einem maximalen Messweg entspricht.

11. Sensoranordnung nach Anspruch 10, **dadurch gekennzeichnet, dass** die ersten Bereiche (x1) und die zweiten Bereiche (x2) jeweils ein gleichschenkliges symmetrisches Trapez ausbilden, wobei eine Basis der Trapeze jeweils senkrecht zum Messweg (M) verläuft und die Höhe der Trapeze jeweils mindestens der doppelten Breite einer Detektionsspule (A, B, C, D) entspricht.

12. Sensoranordnung nach Anspruch 11, **dadurch gekennzeichnet, dass** die ersten Bereiche (x1) jeweils im Wesentlichen von einer elektrisch leitfähigen Messspur (MS1, MS2, MS3, MS4) bedeckt sind, und die zweiten Bereiche (x2) jeweils zwei elektrisch leitfähige Korrekturspuren (KS11, KS12, KS21, KS22, KS31, KS32, KS41, KS42) aufweisen, welche spiegelsymmetrisch zur Mittellängsachse (MLA) des Messwertgebers (14) angeordnet sind.

13. Sensoranordnung nach einem der Ansprüche 1 bis 12, **dadurch gekennzeichnet, dass** der Wirbelstromsensor (20) ein Linearwegsensor ist und das Target (10) entlang einem linearen Messweg (M) angeordnet ist.

14. Sensoranordnung nach einem der Ansprüche 1 bis 12, **dadurch gekennzeichnet, dass** der Wirbelstromsensor (20) ein Drehwinkelsensor ist und das Target (10) auf einer Welle um eine Drehachse (A) angeordnet ist.

15. Verfahren zum Bestimmen einer Relativposition eines Wirbelstromsensors (20) in Bezug auf ein Target (10) einer Sensoranordnung (1) zur berührungslosen Wegerfassung nach einem der Ansprüche 1 bis 14, wobei einer Detektionsspule (A, B, C, D) die Wirkung als Messspule zugeordnet wird, wenn die korrespondierende Detektionsspule (A, B, C, D) über einem ersten Bereich (x1) positioniert ist, oder die Wirkung als Korrekturspule zuordnet wird, wenn die korrespondierende Detektionsspule (A, B, C, D) über einem zweiten Bereich (x2) positioniert ist, wobei mindestens ein Messsignal der als Korrekturspule wirkenden Detektionsspule (A, B, C, D) gemessen und zur Bestimmung einer räumliche Lage des Messwertaufnehmers (24) zum Messwertgeber (14) ausgewertet wird, wobei mindestens ein Messsignal der als Messspule wirkenden Detektionsspule (A, B, C, D) gemessen und basierend auf der bestimmten räumlichen Lage des Messwertaufnehmers (24) zum Messwertgeber (14) korrigiert wird, wobei aus dem korrigierten Messsignal der als Messspule wirkenden Detektionsspule (A, B, C, D) die Relativposition des Wirbelstromsensors (20) in Bezug auf das Target (10) bestimmt wird.

16. Verfahren nach Anspruch 15, **dadurch gekennzeichnet, dass** aus der Relativposition des Wirbelstromsensors (20) in Bezug auf das Target (10) ein zurückgelegter Weg oder ein Drehwinkel berechnet wird.

**Claims**

1. Sensor assembly (1) for detecting a displacement in a contactless manner, comprising a target (10), which has a measurement value encoder (14) that moves along a measurement path (M) and comprises at least one electrically conductive measurement track (MS1, MS2, MS3, MS4), and an eddy current sensor (20) with a measurement value sensor (22) which comprises at least two detection coils (A, B, C, D), wherein the measurement value sensor (22) is arranged at a distance from the measurement value encoder (14) and movable in a relative manner along the at least one electrically conductive measurement track (MS1, MS2, MS3, MS4), wherein said measurement value sensor at least partly covers the measurement track, wherein at least one of the detection coils (A, B, C, D) acts as a measurement coil, the measurement signal of which is evaluated by an evaluation and control unit (5) in order to detect a displacement, wherein at least one of the detection coils (A, B, C, D) acts as a correction coil, the measurement signal of which is evaluated by the evaluation and control unit (5) in order to correct the displacement detection,
**characterized in that**
the measurement value encoder (14) has at least one electrically conductive correction track (KS11, KS12, KS21, KS22, KS31, KS32, KS41, KS42) which is arranged together with the at least one measurement track (MS1, MS2, MS3, MS4) within a common geometry, which geometry is applied on a printed circuit board (12) of the target (10) as a bounded surface, wherein the at least one electrically conductive measurement track (MS1, MS2, MS3, MS4) has a variable width along the measurement path (M) and the at least one electrically conductive correction track (KS11, KS12, KS21, KS22, KS31, KS32, KS41, KS42) has a constant width along the measurement path (M), wherein first regions (x1) with at least one measurement track (MS1, MS2, MS3, MS4) and second regions (x2) with at least one correction track (KS11, KS12, KS21, KS22, KS31, KS32, KS41, KS42) alternate periodically along the measurement path (M), wherein the action of the individual detection coil (A, B, C, D) as measurement coil or as correction coil varies along the measurement path (M), wherein the evaluation and control unit (5) assigns a detection coil (A, B, C, D) the measurement coil action if the corresponding detection coil (A, B, C, D) is positioned over a first region (x1) or the correction coil action if the corresponding detection coil (A, B, C, D) is positioned over a second region (x2).

2. Sensor assembly according to Claim 1, **characterized in that** the eddy current sensor (20) comprises an assignment device (30) with at least two measuring elements (32, 34), wherein the evaluation and control unit (5) evaluates control signals (S1, S2) of the measuring elements (32, 34), and depending on the evaluation determines which of the detection coils (A, B, C, D) is positioned over a first region (x1), and which of the detection coils is positioned over a second region (x2).

3. Sensor assembly according to Claim 2, **characterized in that** the two measuring elements (32, 34) are arranged behind one another along the measurement path (M) in such a way that in the case of a positioning over the first regions (x1) of the at least one measurement track (MS1, MS2, MS3, MS4) the measuring elements (32, 34) are at least partially covered and in the case of a positioning over the second regions (x1), are arranged outside of the at least one correction track (KS11, KS12, KS21, KS22, KS31, KS32, KS41, KS42), wherein the two measuring elements (32, 34) each output a control signal (S1, S2) which represents a degree of coverage of the corresponding measuring element by the at least one measurement track (MS1, MS2, MS3, MS4).

4. Sensor assembly according to Claim 3, **characterized in that** the evaluation and control unit (5) digitizes the control signals (S1, S2) of the measuring elements (32, 34) by comparison with a threshold value (S), wherein the evaluation and control unit (5) assigns the corresponding control signal (S1, S2) a logical first value "1" when the control signal (S1, S2) reaches or exceeds the threshold value (S), and wherein the evaluation and control unit (5) assigns the corresponding control signal (S1, S2) a logical second value "0" if the control signal (S1, S2) is below the threshold value (S).

5. Sensor assembly according to Claim 4, **characterized in that** in accordance with the logical combinations of the digitized control signals (S1, S2) the evaluation and control unit (5) determines one of the detection coils (A, B, C, D), which is completely covered by one of the first regions (x1), as the measurement coil, and determines one of the detection coils (A, B, C, D), which is completely covered by one of the second regions (x2), as the correction coil.

6. Sensor assembly according to any one of Claims 2 to 5, **characterized in that** the measuring elements (32A, 34A) are each implemented as a planar coil (L1, L2), wherein the at least one electrically conductive measurement track (MS1, MS2, MS3, MS4) affects the inductance of the planar coil (L1, L2) of the respective measuring element (32A, 34A) due to eddy current effects depending on the degree of coverage.

7. Sensor assembly according to any one of Claims 2 to 5,
**characterized in that** the measuring elements (32B, 34B) each have two capacitor plates (K11, K12, K21, K22), wherein the at least one measurement track (MS1, MS2, MS3, MS4) affects a capacitive coupling between the two capacitor plates (K11, K12, K21, K22) of the respective measuring element (32B, 34B) depending on the degree of coverage.

8. Sensor assembly according to any one of Claims 1 to 7,
**characterized in that** the measurement value sensor (22) comprises four detection coils (A, B, C, D) implemented as planar coils with rectangular or square cross section, which extend in at least one layer of a sensor circuit board (22).

9. Sensor assembly according to any one of Claims 1 to 7,
**characterized in that** the detection coils (A, B, C, D) are each formed of two partial coils (A1, A2, B1, B2, C1, C2, D1, D2) arranged adjacent to each other spaced apart with respect to the measurement path (M), which are arranged mirror symmetrical with respect to the central longitudinal axis (MLA) of the measurement value encoder (14) .

10. Sensor assembly according to any one of Claims 1 to 9,
**characterized in that** the bounded surface area forms an equal-sided symmetrical trapezium, wherein a base of the trapezium runs perpendicular to the measurement path (M) and corresponds approximately to the length of a detection coil (A, B, C, D), and a height of the trapezium corresponds to at least one maximum measurement path.

11. Sensor assembly according to Claim 10,
**characterized in that** the first regions (x1) and the second regions (x2) each form an equal-sided symmetrical trapezium, wherein each base of the trapeziums runs perpendicular to the measurement path (M) and the height of each trapezium corresponds at least to twice the width of a detection coil (A, B, C, D).

12. Sensor assembly according to Claim 11,
**characterized in that** the first regions (x1) are each substantially covered by an electrically conductive measurement track (MS1, MS2, MS3, MS4), and the second regions (x2) each have two electrically conductive correction tracks (KS11, KS12, KS21, KS22, KS31, KS32, KS41, KS42), which are arranged mirror symmetrical with respect to the central longitudinal axis (MLA) of the measurement value encoder (14).

13. Sensor assembly according to any one of Claims 1 to 12,
**characterized in that** the eddy current sensor (20) is a linear displacement sensor and the target (10) is arranged along a linear measurement path (M).

14. Sensor assembly according to any one of Claims 1 to 12,
**characterized in that** the eddy current sensor (20) is a rotation angle sensor and the target (10) is arranged on a shaft about a rotational axis (A).

15. Method for determining a relative position of an eddy current sensor (20) in relation to a target (10) of a sensor assembly (1) for detecting a displacement in a contactless manner according to any one of Claims 1 to 14, wherein a detection coil (A, B, C, D) is assigned the action as a measurement coil if the corresponding detection coil (A, B, C, D) is positioned over a first region (x1), or is assigned the action as a correction coil if the corresponding detection coil (A, B, C, D) is positioned over a second region (x2), wherein at least one measurement signal of the detection coil (A, B, C, D) acting as a correction coil is measured and evaluated to determine a spatial position of the measurement value sensor (24) relative to the measurement value encoder (14), wherein at least one measurement signal from the detection coil (A, B, C, D) acting as a measurement coil is measured and corrected based on the specific spatial position of the measurement value sensor (24) relative to the measurement value encoder (14), wherein the relative position of the eddy current sensor (20) in relation to the target (10) is determined from the corrected measurement signal of the detection coil (A, B, C, D) acting as a measurement coil.

16. Method according to Claim 15,
**characterized in that** a distance travelled or a rotation angle is calculated from the relative position of the eddy current sensor (20) relative to the target (10).

**Revendications**

1. Arrangement détecteur (1) destiné à l'acquisition de course sans contact comprenant une cible (10), laquelle possède un transmetteur de valeur mesurée (14) comprenant au moins une piste de mesure (MS1, MS2, MS3, MS4) électriquement conductrice et s'étendant le long d'une course de mesure (M), et un capteur à courant de Foucault (20) comprenant un transducteur de mesure (22), lequel comporte au moins deux bobines de détection (A, B, C, D), le transducteur de mesure (22) étant disposé espacé du transmetteur de valeur mesurée (14) et en mobilité relative le long de l'au moins une piste de mesure (MS1, MS2, MS3, MS4) électriquement conductrice et recouvrant celle-ci au moins partiellement, au moins l'une des bobines de détection (A, B, C, D) agissant en tant que bobine de mesure dont le signal de mesure est interprété par une unité d'interprétation et de commande (5) en vue de déterminer la course, au moins l'une des bobines de détection (A, B, C, D) agissant en tant que bobine de correction dont le signal de mesure est interprété par une unité d'interprétation et de commande (5) en vue de corriger la détermination de la course, **caractérisé en ce que** le transmetteur de valeur mesurée (14) possède au moins une piste de correction (KS11, KS12, KS21, KS22, KS31, KS32, KS41, KS42) électriquement conductrice, laquelle est disposée avec l'au moins une piste de mesure (MS1, MS2, MS3, MS4) à l'intérieur d'une géométrie commune, laquelle est appliquée en tant que surface limitée sur un circuit imprimé (12) de la cible (10), l'au moins une piste de mesure (MS1, MS2, MS3, MS4) électriquement conductrice possédant une largeur variable le long de la course de mesure (M) et l'au moins une piste de correction (KS11, KS12, KS21, KS22, KS31, KS32, KS41, KS42) électriquement conductrice possédant une largeur constante le long de la course de mesure (M), des premières zones (x1) comprenant au moins une piste de mesure (MS1, MS2, MS3, MS4) et des deuxièmes zones (x2) comprenant au moins une piste de correction (KS11, KS12, KS21, KS22, KS31, KS32, KS41, KS42) s'alternant périodiquement le long de la course de mesure (M), l'action des bobines de détection (A, B, C, D) individuelles en tant que bobine de mesure ou en tant que bobine de correction variant le long de la course de mesure (M), l'unité d'interprétation et de commande (5) affectant à une bobine de détection (A, B, C, D) l'action de bobine de mesure lorsque la bobine de détection (A, B, C, D) correspondante est positionnée au-dessus d'une première zone (x1), ou lui affectant l'action de bobine de correction lorsque la bobine de détection (A, B, C, D) correspondante est positionnée au-dessus d'une deuxième zone (x2).

2. Arrangement détecteur selon la revendication 1, **caractérisé en ce que** le capteur à courant de Foucault (20) comporte un dispositif d'affectation (30) comprenant au moins deux éléments de mesure (32, 34), l'unité d'interprétation et de commande (5) interprétant des signaux de commande (S1, S2) des éléments de mesure (32, 34) et déterminant, en fonction de l'interprétation, laquelle des bobines de détection (A, B, C, D) est disposée au-dessus d'une première zone (x1) et laquelle des bobines de détection est disposée au-dessus d'une deuxième zone (x2).

3. Arrangement détecteur selon la revendication 2, **caractérisé en ce que** les deux éléments de mesure (32, 34) sont disposés l'un derrière l'autre le long de la course de mesure (M) de telle sorte que les éléments de mesure (32, 34) sont recouverts au moins partiellement par l'au moins une piste de mesure (MS1, MS2, MS3, MS4) dans le cas d'un positionnement au-dessus des premières zones (x1) et, dans le cas d'un positionnement au-dessus des deuxièmes zones (x1), sont disposés en-dehors de l'au moins une piste de correction (KS11, KS12, KS21, KS22, KS31, KS32, KS41, KS42), les deux éléments de mesure (32, 34) délivrant respectivement un signal de commande (S1, S2) qui représente un degré de recouvrement de l'élément de mesure correspondant avec l'au moins une piste de mesure (MS1, MS2, MS3, MS4).

4. Arrangement détecteur selon la revendication 3, **caractérisé en ce que** l'unité d'interprétation et de commande (5) numérise les signaux de commande (S1, S2) des éléments de mesure (32, 34) par comparaison avec une valeur de seuil (S), l'unité d'interprétation et de commande (5) affectant au signal de commande (S1, S2) correspondant une première valeur logique « 1 » lorsque le signal de commande (S1, S2) atteint ou dépasse la valeur de seuil (S), et l'unité d'interprétation et de commande (5) affectant au signal de commande (S1, S2) correspondant une deuxième valeur logique « 0 » lorsque le signal de commande (S1, S2) se trouve au-dessous de la valeur de seuil (S).

5. Arrangement détecteur selon la revendication 4, **caractérisé en ce que** l'unité d'interprétation et de commande (5), en fonction des combinaisons logiques des signaux de commande (S1, S2) numérisés, détermine en tant que bobine de mesure l'une des bobines de détection (A, B, C, D) qui est entièrement recouverte par l'une des premières zones (x1), et détermine en tant que bobine de correction l'une des bobines de détection (A, B, C, D) qui est entièrement recouverte par l'une des deuxièmes zones (x2).

6. Arrangement détecteur selon l'une des revendications 2 à 5, **caractérisé en ce que** les éléments de mesure (32A, 34A) sont respectivement réalisés sous la forme d'une bobine plane (L1, L2), l'au moins une piste de mesure (MS1, MS2, MS3, MS4) électriquement conductrice influençant l'inductance de la bobine plane (L1, L2) de l'élément de mesure (32A, 34A) respectif par des effets de courant de Foucault en fonction du degré de recouvrement.

7. Arrangement détecteur selon l'une des revendications 2 à 5, **caractérisé en ce que** les éléments de mesure (32B, 34B) possèdent respectivement deux plaques de condensateur (K11, K12, K21, K22), l'au moins une piste de mesure (MS1, MS2, MS3, MS4) influençant un couplage capacitif entre les deux plaques de condensateur (K11, K12, K21, K22) de l'élément de mesure (32B, 34B) respectif en fonction du degré de recouvrement.

8. Arrangement détecteur selon l'une des revendications 1 à 7, **caractérisé en ce que** le transducteur de mesure (22) comporte quatre bobines de détection (A, B, C, D) réalisées sous la forme de bobines planes à section transversale rectangulaire ou carrée, lesquelles s'étendent dans au moins une couche d'un circuit imprimé de détecteur (22).

9. Arrangement détecteur selon l'une des revendications 1 à 7, **caractérisé en ce que** les bobines de détection (A, B, C, D) sont respectivement formées de deux bobines partielles (A1, A2, B1, B2, C1, C2, D1, D2) disposées espacées les unes à côté des autres en référence à la course de mesure (M), lesquelles sont disposées selon une symétrie en miroir par rapport à l'axe longitudinal central (MLA) du transmetteur de valeur mesurée (14).

10. Arrangement détecteur selon l'une des revendications 1 à 9, **caractérisé en ce que** la surface limitée forme un trapèze symétrique isocèle, une base du trapèze s'étendant perpendiculairement à la course de mesure (M) et correspondant approximativement à la longueur d'une bobine de détection (A, B, C, D) et une hauteur du trapèze correspondant au moins à une course de mesure maximale.

11. Arrangement détecteur selon la revendication 10, **caractérisé en ce que** les premières zones (x1) et les deuxièmes zones (x2) forment respectivement un trapèze symétrique isocèle, une base des trapèzes s'étendant à chaque fois perpendiculairement à la course de mesure (M) et la hauteur des trapèzes correspondant à chaque fois au moins au double de la largeur d'une bobine de détection (A, B, C, D).

12. Arrangement détecteur selon la revendication 11, **caractérisé en ce que** les premières zones (x1) sont respectivement couvertes sensiblement par une piste de mesure (MS1, MS2, MS3, MS4) électriquement conductrice et les deuxièmes zones (x2) possèdent respectivement deux pistes de correction (KS11, KS12, KS21, KS22, KS31, KS32, KS41, KS42) électriquement conductrices qui sont disposées selon une symétrie en miroir par rapport à l'axe longitudinal central (MLA) du transmetteur de valeur mesurée (14).

13. Arrangement détecteur selon l'une des revendications 1 à 12, **caractérisé en ce que** le capteur à courant de Foucault (20) est un détecteur de course linéaire et la cible (10) est disposée le long d'une course de mesure (M) linéaire.

14. Arrangement détecteur selon l'une des revendications 1 à 12, **caractérisé en ce que** le capteur à courant de Foucault (20) est un détecteur d'angle de rotation et la cible (10) est disposée sur un arbre autour d'un axe de rotation (A).

15. Procédé pour déterminer une position relative d'un capteur à courant de Foucault (20) en référence à une cible (10) d'un arrangement détecteur (1) destiné à l'acquisition de course sans contact selon l'une des revendications 1 à 14, l'action de bobine de mesure étant affectée à une bobine de détection (A, B, C, D) lorsque la bobine de détection (A, B, C, D) correspondante est positionnée au-dessus d'une première zone (x1), ou l'action de bobine de correction lui étant affectée lorsque la bobine de détection (A, B, C, D) correspondante est positionnée au-dessus d'une deuxième zone (x2), au moins un signal de mesure de la bobine de détection (A, B, C, D) agissant en tant que bobine de correction étant mesuré et interprété en vue de déterminer une position dans l'espace du transducteur de mesure (24) par rapport au transmetteur de valeur mesurée (14), au moins un signal de mesure de la bobine de détection (A, B, C, D) agissant en tant que bobine de mesure étant mesuré et corrigé en se basant sur la position dans l'espace déterminée du transducteur de mesure (24) par rapport au transmetteur de valeur mesurée (14), la position relative du capteur à courant de Foucault (20) en référence à la cible (10) étant déterminée à partir du signal de mesure corrigé de la bobine de détection (A, B, C, D) agissant en tant que bobine de mesure.

16. Procédé selon la revendication 15, **caractérisé en ce qu'**une course parcourue ou un angle de rotation est calculé à partir de la position relative du capteur à courant de Foucault (20) en référence à la cible (10).

**Fig. 1**

**Fig. 2**

A1,A2,
B1,B2,
C1,C2,
D1,D2,

**Fig. 3**

f[MHz]

A[mm]

**Fig. 4**

30A

MS3

12

A

z

x

y

22

32A,L1

34A,L2

S2

5

S1

**Fig. 5**

Fig. 6

Fig. 7

ÜG

S1    S2

1

0,8

0,6                                              S

0,4

0,2

0

0    50    100    150    200    250    300

M[mm]

Fig. 8

ÜG    1
      0,5    p  t  p  t                          A
      0
      0        50    100    150    200    250    300

ÜG    1
      0,5    t  p  t  p                          B
      0
      0        50    100    150    200    250    300

ÜG    1
      0,5    t  t                                C
             p  p
      0
      0        50    100    150    200    250    300

ÜG    1
      0,5    t  t                                D
             p  p
      0
      0        50    100    150    200    250    300

ÜG    1    1    1                               S1
      0,5                                             S
      0    0    0
      0        50    100    150    200    250    300

ÜG    1    1    1                               S2
      0,5                                             S
      0    0    0
      0        50    100    150    200    250    300

M[mm]    Fig. 9

18

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004033083 A1
- US 2007001666 A1